# EUROPÄISCHE PATENTSCHRIFT

(11) **EP 3 349 337 B1**
(45) Veröffentlichungstag und Bekanntmachung des Hinweises auf die Patenterteilung: **12.02.2020**
(21) Anmeldenummer: 17209171.2
(22) Anmeldetag: 20.12.2017
(51) Int. Cl.: H02K 5/18, B62M 6/55, H02K 7/14, H02K 11/33, B62J 99/00, B62J 17/00

(54) **ENTWÄRMUNG EINES ANTRIEBS FÜR ELEKTROFAHRRÄDER DURCH LUFTSTRÖMUNG**
DISSIPATION OF HEAT FROM A DRIVE BY AN AIR STREAM FOR ELECTRIC BICYCLES
DISSIPATION THERMIQUE D'UN ENTRAÎNEMENT POUR BICYCLETTES ÉLECTRIQUES PAR FLUX D'AIR

(30) Priorität: 11.01.2017 DE 102017200387
(43) Veröffentlichungstag der Anmeldung: 18.07.2018
(73) Patentinhaber: Robert Bosch GmbH, 70442 Stuttgart (DE)
(72) Erfinder: Barber, Stephan, 72760 Reutlingen (DE); Schock, Wolfram, 72770 Ohmenhausen (DE)

(56) Entgegenhaltungen:
- DE-A1- 19 546 040
- DE-A1-102010 026 650
- US-A- 4 668 898
- US-A1- 2010 126 703

## Beschreibung

### Stand der Technik

Die vorliegende Erfindung betrifft eine Elektroantriebsvorrichtung aufweisend ein Antriebsgehäuse mit Wärmequellen, die im Antriebsgehäuse angeordnet sind. Außerdem betrifft die Erfindung ein Fahrrad mit einer integrierten Elektroantriebsvorrichtung.

Aus dem Stand der Technik sind Elektrofahrräder, auch eBikes genannt, mit unterschiedlichen Antriebskonzepten bekannt. Bei den Antriebskonzepten wird zwischen Vorderradnabenantrieben, Hinterradantrieben und Mittelmotoren unterschieden. Dabei sind die Antriebe außerhalb des Fahrradrahmens platziert und werden oft als optisch störender Fremdkörper empfunden.

Die Antriebe, wie in DE102010026650 schon beschrieben, können als im Fahrradrahmen integrierte Antriebe ausgebildet sein. Dies hat den Vorteil, dass die Antriebe als optisch nicht störend empfunden werden und gut vor Schmutz und Feuchtigkeit geschützt sind. Nachteilig wirkt sich aus, dass die im Antrieb entstehende Wärme, also Abwärme, nur schlecht abgeführt werden kann, weshalb die Leistungsabgabe reduziert werden muss, um so eine Überhitzung zu vermeiden.

### Offenbarung der Erfindung

Die Erfindung geht aus von einer Elektroantriebsvorrichtung nach Gattung des unabhängigen Anspruchs 1. Ferner geht die Erfindung aus von einem Fahrrad nach Gattung des abhängigen Anspruchs 8. Unter einer Elektroantriebsvorrichtung seien im Rahmen der Erfindung die wesentlichen Bauteile elektrischer Antrieb, Akkumulator und Steuereinheit sowie ihr Zusammenwirken zu verstehen. Unter Wärmequellen seien im Rahmen der Erfindung die im Antriebsgehäuse eingebauten Komponenten zu verstehen, die Wärme emittieren. Beispiele hierfür sind ein Elektromotor und eine Leistungselektronik.

Unter einer Kühlvorrichtung sei im Rahmen der Erfindung ein Bauteil zu verstehen, das eingerichtet ist, Wärme von den Wärmequellen aufzunehmen und die aufgenommene Wärme an die Umgebung nach außerhalb des Antriebsgehäuses wieder abzugeben. Damit kann die integrierte Elektroantriebsvorrichtung länger und ohne Überhitzen betrieben werden, wodurch eine konstante Leistungsabgabe ermöglicht wird. Folglich kann die Elektroantriebsvorrichtung als integrierte Vorrichtung auch in Fahrradrahmen aus Kohlefasern verwendet werden, die Wärme bekanntermaßen noch schlechter ableiten als metallische Rahmen. Die Kühlvorrichtung weist einen Kühlkörper auf. Bevorzugt weist der Kühlkörper wenigstens eine nach außen gerichtete Kühlfläche auf, die im Kontakt mit der Umgebung steht. Hierzu weist die Elektroantriebsvorrichtung ein mit einer Öffnung versehenes Gehäuse auf, das es der Kühlfläche des Kühlkörpers ermöglicht, im Kontakt mit der Umgebung zu stehen. Besonders bevorzugt ist der Kühlkörper als flächiges Bauteil ausgebildet. Bei Inbetriebnahme des Fahrrads, also bei Betätigung des Fahrrads, erfährt der Kühlköper eine Abkühlung infolge Fahrtwind. Dabei wird der Kühlkörper infolge der auftretenden Luftströmungen bzw. Luftverwirbelungen von Kaltluft umströmt. Der Kühlkörper nimmt die Kaltluft auf. Da der Kühlkörper infolge Wärmeaufnahme aus den Wärmequellen wärmer ist als die Kaltluft, findet eine Wärmeübertragung vom Kühlkörper an die Umgebung nach außerhalb der Elektroantriebsvorrichtung statt. Hierbei wird die Wärme als Warmluft abgegeben. Ferner ist die Kühlvorrichtung verdrehbar am Antriebsgehäuse gelagert. Durch das Vorsehen der verdrehbar gelagerten Kühlvorrichtung ist eine Positionierung eines Kühlkörpers der Kühlvorrichtung relativ zum Antriebsgehäuse ausführbar. Damit ist es möglich, den Antrieb in einem gewissen Winkelbereich zu einem Unter- und Sattelrohr des Fahrradrahmens zu montieren und gestalterisch zu integrieren. Die Kühlfläche kann dann immer in einer optisch ansprechenden Linie in Verlängerung der Rahmenrohre montiert werden.

Die Unteransprüche zeigen bevorzugte Weiterbildungen der Erfindung.

Eine erste Wärmequelle ist als elektrischer Motor ausgebildet und in einem Motortopf des Antriebsgehäuses angeordnet, wobei die Kühlvorrichtung einen mit dem Kühlkörper verbundenen Haltering zur Positionierung des Kühlkörpers am Motortopf aufweist. Durch das Vorsehen des Halterings lässt sich die Kühlvorrichtung auf einfache Weise am Motortopf aufsetzen und im gewünschten Winkel verdrehen. Außerdem wird Wärme, die vom Motortopf emittiert wird, über den Haltering zum Kühlkörper geleitet. Bevorzugt ist der Haltering ringförmig oder hohlzylindrisch ausgebildet. Besonders bevorzugt ist der Haltering tangential am Kühlkörper angeschlossen. Vorzugsweise wird als elektrischer Motor ein Permanentmagnet-erregter Gleichstrommotor verwendet. Das hat den Vorteil, auf Schleifkontakte verzichten zu können.

Weiter vorteilhaft ist der Kühlkörper in einem entspannten Zustand des Halterings verdrehbar auf dem Motortopf angeordnet und in einem gespannten Zustand des Halterings verdrehsicher auf dem Motortopf angeordnet.

Im entspannten Zustand lässt sich der Kühlkörper in einem gewünschten Winkel gegenüber dem Motortopf und damit dem Antriebsgehäuse positionieren bevor eine Fixierung der Kühlvorrichtung erfolgt. Im gespannten Zustand lässt sich die Kühlvorrichtung drehfest am Motortopf anbringen. Bevorzugt erfolgt ein Fixieren des Halterings mittels einer Spannvorrichtung am Haltering, bspw. eines Schnellspanners.

Infolge einer lösbaren Verbindung zwischen Kühlvorrichtung und Antriebsgehäuse kann der Kühlkörper im Fall optischer oder technischer Beschädigungen getauscht werden. Dabei ist die nach außen ragende Fläche des Kühlkörpers so konstruiert, dass sie mit einem Hochdruckreiniger leicht gereinigt werden kann.

Weiter vorteilhaft liegt der Haltering plan auf der äußeren Mantelfläche des Motortopfs auf. Dies hat den Vorteil, dass die von den Wärmequellen emittierte Wärme großflächig vom Haltering und damit dem Kühlkörper aufgenommen werden kann. Dabei leitet der Haltering die Wärme zum Kühlkörper, der wiederum die erzeugter Wärme nach außerhalb der Elektroantriebsvorrichtung leitet. Hierdurch lässt sich Wärme auf einfache Weise von innerhalb der Vorrichtung an die Umgebung nach außerhalb der Vorrichtung abführen, was zu einer Abkühlung in der Elektroantriebsvorrichtung führt.

Weiter vorteilhaft ist eine zweite Wärmequelle als Leistungselektronik ausgebildet und in einem Leistungselektronikgehäuse angeordnet. Durch das Vorsehen des Leistungselektronikgehäuses kann eine großflächige Kühlung der Leistungselektronik erfolgen.

Weiter vorteilhaft ist das Leistungselektronikgehäuse koaxial zu einer Achse des elektrischen Motors am Antriebsgehäuse angeordnet. Hierdurch wird ein gemeinsam erscheinender Kühlkörper bereitgestellt, der neben dem elektrischen Motor auch die Leistungselektronik kühlen kann.

Weiter vorteilhaft besteht die Kühlvorrichtung aus einem wärmeleitfähigen Material, insbesondere Aluminium. Aluminium hat den Vorteil, dass es eine hohe Wärmeleitfähigkeit aufweist. Alternativ besteht der Kühlkörper aus einer Legierung, bspw. einer Aluminiumlegierung. Damit lässt sich auch eine ausreichende Kühlung bewerkstelligen.

Weiter vorteilhaft weist der Kühlkörper an seiner der Wärmequellen abgewandten Seite Kühlrippen auf. Die Kühlrippen dienen der Vergrößerung der Oberfläche des Kühlkörpers. Mittels der Kühlrippen lässt sich eine Wärmeübertragung an die Umgebung und damit eine Kühlung innerhalb der Elektroantriebsvorrichtung auf einfache Weise ausführen.

Weiter vorteilhaft ist die Elektroantriebsvorrichtung zwischen einem Unterrohr, einem Sitzrohr und einer Kettenstrebe des Fahrrads angeordnet. Damit lässt sich die Elektroantriebsvorrichtung auf einfache Weise im Fahrradrahmen integrieren.

### Kurze Beschreibung der Zeichnung(en)

Nachfolgend werden Ausführungsbeispiele der Erfindung unter Bezugnahme auf die begleitende Zeichnung im Detail beschrieben. In der Zeichnung ist:
- Figur 1: eine schematische Ansicht einer ersten erfindungsgemäßen Elektroantriebsvorrichtung für ein Fahrrad und
- Figur 2: eine schematische Ansicht einer zweiten erfindungsgemäßen Elektroantriebsvorrichtung für ein Fahrrad.

### Ausführungsform(en) der Erfindung

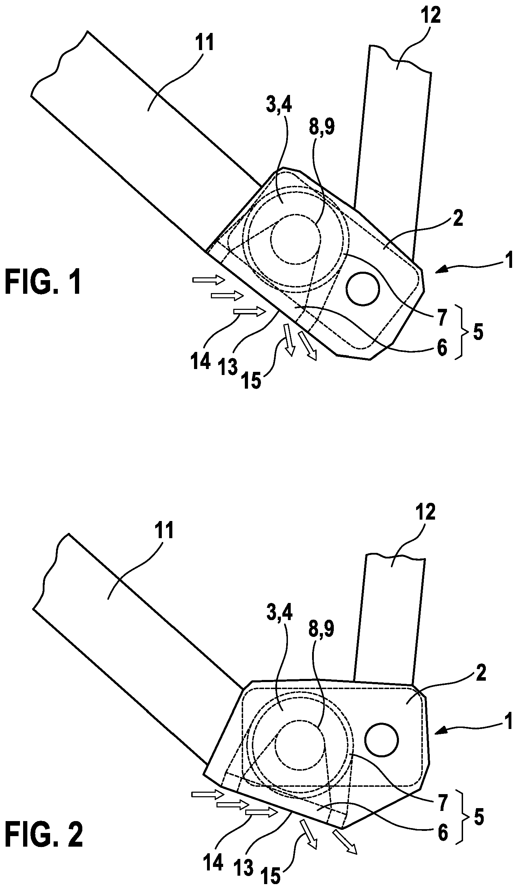

Figur 1 zeigt eine schematische Ansicht einer ersten erfindungsgemäßen Elektroantriebsvorrichtung 1. Die Elektroantriebsvorrichtung 1 ist zwischen einem Unterrohr 11, einem Sitzrohr 12 und einer nicht gezeigten Kettenstrebe des Rahmens des Fahrrads integriert. Die Elektroantriebsvorrichtung 1 befindet sich in einem gedrehten Einbauzustand. Eine nach außen gerichtete Kühlfläche eines Kühlkörpers 6 ist in einer optisch ansprechenden Linie in Verlängerung des Unterrohres 11 montiert. Die Elektroantriebsvorrichtung 1 weist eine mit einer Öffnung versehene Einhausung auf, die es der Kühlfläche ermöglicht, im Kontakt mit der Umgebung zu stehen.

Die Elektroantriebsvorrichtung 1 weist ein Antriebsgehäuse 2 mit integrierten Wärmequellen 3, 8 und wenigstens einen relativ zum Antriebsgehäuse 2 verdrehbar angeordnete Kühlvorrichtung 5 auf. Eine erste Wärmequelle 3 ist ein elektrischer Motor, der in einem Motortopf 4 des Antriebsgehäuses 2 angeordnet ist. Eine zweite Wärmequelle 8 ist eine Leistungselektronik, die in einem Leistungselektronikgehäuse 9 koaxial zur Achse des elektrischen Motors am Antriebsgehäuse 2 angeordnet ist.

Die Kühlvorrichtung 5 weist einen Kühlkörper 6 und einen ringförmig ausgebildeten Haltering 7 auf, der am Kühlkörper 6 angeschlossen ist. Die Kühlvorrichtung 5 dient der Abführung von durch die Wärmequellen 3, 8 erzeugter Wärme an die Umgebung nach außerhalb der Elektroantriebsvorrichtung 1. Dabei leitet der Haltering 7 die Wärme des elektrischen Motors als auch die Wärme der Leistungselektronik zum Kühlkörper 6, der die erzeugter Wärme nach außerhalb der Elektroantriebsvorrichtung 1 abgibt.

Der Haltering 7 der Kühlvorrichtung 5 dient der Positionierung an einem Motortopf 4 des Antriebsgehäuses 2. In einem gespannten Zustand ist der Halterring 7 in einem verdrehsicheren Zustand auf dem Motortopf 4 fixiert. In einem entspannten Zustand lässt sich die Kühlvorrichtung 5 um den Motortopf 4 in eine gewünschte Position drehen, bevor er im gespannten Zustand fixiert wird.

Der Haltering 7 liegt plan auf der äußeren Mantelfläche des Motortopfs 4 auf. Der Haltering 7 liegt dabei großflächig auf der Mantelfläche des Motortopfs 4 auf. Die Kühlvorrichtung 5 ist aus einem wärmeleitfähigen Material, nämlich Aluminium. Der Kühlkörper 6 weist an seiner der Wärmequellen 3, 8 abgewandten Seite 13 Kühlrippen auf, um eine Wärmeübertragung an die Umgebung und damit eine Kühlung innerhalb der Elektroantriebsvorrichtung 1 auf einfache Weise durchzuführen.

Bei Inbetriebnahme des Fahrrads, also bei Betätigung des Fahrrads, erfährt der Kühlköper 6 eine Abkühlung infolge Fahrtwind. Dabei wird der Kühlkörper 6 infolge der auftretenden Luftströmungen bzw. Luftverwirbelungen von Kaltluft 14 umströmt. Der Kühlkörper 6 nimmt die Kaltluft 14 auf. Da der Kühlkörper 6 infolge Wärmeaufnahme aus den Wärmequellen 3 wärmer ist als die Kaltluft 14, findet eine Wärmeübertragung vom Kühlkörper nach außerhalb der Elektroantriebsvorrichtung 1 an die Umgebung statt. Hierbei wird die Wärme als Warmluft 15 abgegeben.

Figur 2 zeigt eine schematische Ansicht einer zweiten erfindungsgemäßen Elektroantriebsvorrichtung 1. Im Unterschied zur Figur 1 befindet sich die Elektroantriebsvorrichtung 1 im horizontalen Einbauzustand. Gleichwohl ist der Kühlkörper 6 gegenüber dem Antriebsgehäuse 2 um einen Winkel verdreht angeordnet.

Durch das Vorsehen der verdrehbar gelagerten Kühlvorrichtung 5 gemäß Figur 1 und Figur 2 ist eine Positionierung des Kühlkörpers 6 relativ zum Antriebsgehäuse 2 ausführbar, wobei eine Wärmeübertragung vom Kühlkörper 6 nach außerhalb der Elektroantriebsvorrichtung 1 an die Umgebung stattfindet. Die integrierte Elektroantriebsvorrichtung 1 kann länger und ohne Überhitzen betrieben werden, wodurch eine konstante Leistungsabgabe ermöglicht wird.

Während die vorliegende Erfindung anhand der beigefügten Figuren ausführlich und detailliert beschrieben worden ist, bleibt der Schutzbereich der vorliegenden Erfindung allein durch die beigefügten Ansprüche beschränkt.

## Patentansprüche

1. Elektroantriebsvorrichtung (1) für ein Fahrrad, wobei die Elektroantriebsvorrichtung (1) ein Antriebsgehäuse (2) mit Wärmequellen (3, 8) aufweist, wobei eine erste Wärmequelle (3) als elektrischer Motor ausgebildet ist und in einem Motortopf (4) des Antriebsgehäuses (2) angeordnet ist,
**dadurch gekennzeichnet, dass**
• das Antriebsgehäuse (2) eine Öffnung aufweist, und
• die Elektroantriebsvorrichtung (1) folgende Komponenten aufweist
∘ eine relativ zum Antriebsgehäuse (2) verdrehbar angeordnete Kühlvorrichtung (5) mit einem Kühlkörper (6) zur Abführung von durch die Wärmequellen (3, 8) erzeugter Wärme nach außerhalb der Elektroantriebsvorrichtung (1), wobei es die Öffnung einer Kühlfläche des Kühlkörpers (6) ermöglicht, im Kontakt mit der Umgebung zu stehen, und
∘ einen mit dem Kühlkörper (6) verbundenen Haltering (7) zur Positionierung des Kühlkörpers (6) am Motortopf (4), wobei Wärme, die vom Motortopf (4) emittiert wird, über den Haltering (7) zum Kühlkörper (6) geleitet wird.

2. Elektroantriebsvorrichtung (1) nach Anspruch 1, wobei der Kühlkörper (6) in einem entspannten Zustand des Halterings (7) verdrehbar auf dem Motortopf (4) angeordnet ist und in einem gespannten Zustand des Halterings (7) verdrehsicher auf dem Motortopf (4) angeordnet ist.

3. Elektroantriebsvorrichtung (1) nach einem der Ansprüche 1 oder 2 wobei der Haltering (7) plan auf der äußeren Mantelfläche des Motortopfs (4) aufliegt.

4. Elektroantriebsvorrichtung (1) nach einem der vorhergehenden Ansprüche, wobei eine zweite Wärmequelle (8) als Leistungselektronik ausgebildet ist und in einem Leistungselektronikgehäuse (9) angeordnet ist.

5. Elektroantriebsvorrichtung (1) nach Anspruch 4, wobei das Leistungselektronikgehäuse (9) koaxial zu einer Achse des elektrischen Motors am Antriebsgehäuse (2) angeordnet ist.

6. Elektroantriebsvorrichtung (1) nach einem der vorhergehenden Ansprüche, wobei die Kühlvorrichtung (5) aus einem wärmeleitfähigen Material besteht, insbesondere Aluminium.

7. Elektroantriebsvorrichtung (1) nach einem der vorhergehenden Ansprüche, wobei der Kühlkörper (6) an seiner den Wärmequellen (3, 8) abgewandten Seite (13) Kühlrippen aufweist.

8. Fahrrad aufweisend eine integrierte Elektroantriebsvorrichtung (1) nach einem der vorhergehenden Ansprüche.

9. Fahrrad nach Anspruch 8, wobei die Elektroantriebsvorrichtung (1) zwischen einem Unterrohr (11), einem Sitzrohr (12) und einer Kettenstrebe des Fahrrads angeordnet ist.

## Claims

1. Electric drive device (1) for a bicycle, wherein the electric drive device (1) has a drive housing (2) with heat sources (3, 8), wherein the first heat source (3) is embodied as an electric motor and is arranged in a motor pot (4) of the drive housing (2),
**characterized in that**
• the drive housing (2) has an opening, and
• the electric drive device (1) has the following components
∘ a cooling device (5) which is arranged so as to be rotatable in relation to the drive housing (2) and has a heat sink (6) for conducting away heat generated by the heat sources (3, 8) to outside the electric drive device (1), wherein it permits the opening of a cooling face of the heat sink (6) to be in contact with the surroundings, and
∘ a securing ring (7) which is connected to the heat sink (6) and has the purpose of positioning the heat sink (6) on the motor pot (4), wherein heat which is emitted by the motor pot (4) is conducted to the heat sink (6) via the securing ring (7).

2. Electric drive device (1) according to Claim 1, wherein in a relaxed state of the securing ring (7) the heat sink (6) is arranged so as to be rotatable on the motor pot (4), and in a stressed state of the securing ring (7) it is arranged in a rotatably secured fashion on the motor pot (4).

3. Electric drive device (1), according to one of Claims 1 and 2, wherein a securing ring (7) rests in a planar fashion on the outer lateral face of the motor pot (4).

4. Electric drive device (1), according to one of the preceding claims, wherein the second heat source (8) is embodied as power electronics and is arranged in a power electronics housing (9).

5. Electric drive device (1), according to Claim 4 wherein the power electronics housing (9) is arranged coaxially with respect to an axle of the electric motor on the drive housing (2).

6. Electric drive device (1), according to one of the preceding claims, wherein the cooling device (5) is composed of thermally conductive material, in particular aluminium.

7. Electric drive device (1), according to one of the preceding claims, wherein the heat sink (6) has cooling fins on its side (13) facing away from the heat sources (3, 8).

8. Bicycle having an integrated electric drive device (1) according to one of the preceding claims.

9. Bicycle according to Claim 8, wherein the electric drive device (1) is arranged between a down tube (11), a seat tube (12) and a chain stay of the bicycle.

## Revendications

1. Dispositif d'entraînement électrique (1) pour une bicyclette, le dispositif d'entraînement électrique (1) possédant un boîtier d'entraînement (2) avec des sources de chaleur (3, 8), une première source de chaleur (3) étant réalisée sous la forme d'un moteur électrique et étant disposée dans un pot à moteur (4) du boîtier d'entraînement (2),
**caractérisé en ce que**
* le boîtier d'entraînement (2) possède une ouverture, et
* le dispositif d'entraînement électrique (1) possède les composants suivants
o un dispositif de refroidissement (5) monté rotatif par rapport au boîtier d'entraînement (2) et comprenant un dissipateur de chaleur (6) destiné à évacuer la chaleur produite par les sources de chaleur (3, 8) vers l'extérieur du dispositif d'entraînement électrique (1), l'ouverture permettant à une surface de refroidissement du dissipateur de chaleur (6) d'être en contact avec l'environnement et
∘ une bague de maintien (7) reliée au dissipateur de chaleur (6) et servant au positionnement du dissipateur de chaleur (6) sur le pot à moteur (4), la chaleur qui est émise par le pot à moteur (4) étant conduite vers le dissipateur de chaleur (6) par le biais de la bague de maintien (7).

2. Dispositif d'entraînement électrique (1) selon la revendication 1, le dissipateur de chaleur (6), dans un état desserré de la bague de maintien (7), étant monté rotatif sur le pot à moteur (4) et, dans un état serré de la bague de maintien (7), étant monté en rotation solidaire sur le pot à moteur (4).

3. Dispositif d'entraînement électrique (1) selon l'une des revendications 1 ou 2, la bague de maintien (7) reposant à plan sur l'enveloppe extérieure du pot à moteur (4).

4. Dispositif d'entraînement électrique (1) selon l'une des revendications précédentes, une deuxième source de chaleur (8) étant réalisée sous la forme d'une électronique de puissance et étant disposée dans un boîtier d'électronique de puissance (9).

5. Dispositif d'entraînement électrique (1) selon la revendication 4, le boîtier d'électronique de puissance (9) étant disposé au niveau du boîtier d'entraînement (2) de manière coaxiale par rapport à un axe du moteur électrique.

6. Dispositif d'entraînement électrique (1) selon l'une des revendications précédentes, le dispositif de refroidissement (5) se composant d'un matériau thermoconducteur, notamment de l'aluminium.

7. Dispositif d'entraînement électrique (1) selon l'une des revendications précédentes, le dissipateur de chaleur (6) possédant des ailettes de refroidissement sur son côté (13) à l'opposé des sources de chaleur (3, 8).

8. Bicyclette possédant un dispositif d'entraînement électrique (1) intégré selon l'une des revendications précédentes.

9. Bicyclette selon la revendication 8, le dispositif d'entraînement électrique (1) étant disposé entre un tube diagonal (11), un tube de selle (12) et une base de la bicyclette.
